# EUROPÄISCHE PATENTSCHRIFT

(11) **EP 0 844 143 B1**
(45) Veröffentlichungstag und Bekanntmachung des Hinweises auf die Patenterteilung: **02.10.2002**
(21) Anmeldenummer: 97120039.9
(22) Anmeldetag: 15.11.1997
(51) Int. Cl.: B60R 21/20

(54) **Gehäuse mit einer Kammer zur Aufnahme eines zusammengefalteten und aufblasbaren Luftsackes**
Casing with a receiving cavity for foldable and inflatable airbag
Boîtier avec logement de réception d'un coussin de sécurité plié et gonflable.

(30) Priorität: 21.11.1996 DE 19648136
(43) Veröffentlichungstag der Anmeldung: 27.05.1998
(73) Patentinhaber: ADAM OPEL AG, 65423 Rüsselsheim (DE)
(72) Erfinder: Ulrich, Rick, Dipl.-Ing., 55595 Roxheim (DE)

(56) Entgegenhaltungen:
- EP-A- 0 461 276
- EP-A- 0 487 753
- US-A- 4 911 471
- "AIR BAG WITH IMPROVED OCCUPANT PERFORMANCE" RESEARCH DISCLOSURE, Nr. 392, Dezember 1996, Seite 805 XP000682096
- PATENT ABSTRACTS OF JAPAN vol. 016, no. 069 (M-1212), 20.Februar 1992 & JP 03 258636 A (MAZDA MOTOR CORP), 18.November 1991,
- PATENT ABSTRACTS OF JAPAN vol. 095, no. 006, 31.Juli 1995 & JP 07 061310 A (TOYODA GOSEI CO LTD), 7.März 1995,

## Beschreibung

Die Erfindung bezieht sich auf ein Gehäuse mit einer Kammer zur Aufnahme eines zusammengefalteten und aufblasbaren Luftsackes nach Patentanspruch 1.

### Stand der Technik:

Um den Fahrer bzw. Beifahrer eines Fahrzeuges bei einem Unfall vor Verletzungen zu schützen, wird für den Fahrer in der Nabe des Lenkrades und ggf. für den Beifahrer in dem vor ihm liegenden Armaturenbrettabschnitt jeweils ein aufblasbarer Luftsack, auch Airbag genannt, eingesetzt. Der Luftsack ist zusammengefaltet in einer Kammer mit einer zum Fahrgastinnenraum ausgerichteten und durch eine Abdeckung verschlossene Hauptöffnungen untergebracht. Die Größe der Kammer ist den Ausmaßen des Luftsacks im zusammengefalteten Zustand angepaßt. Eine Abdeckung besteht aus ein oder mehreren Klappen, die mit jeweils einer Kante an das die Kammer bildenden Gehäuse angelenkt sind. Die Klappen sind unter Bildung eines Grenzspaltes in einem die Hauptöffnung formenden Gehäuserahmen eingesetzt. Dabei ist entlang des Grenzspalts eine aufreißbare Verbindung vorgesehen, die durch den sich entfaltenden Luftsack aufgetrennt wird.

Zur Abdeckung eines Luftsackes in Lenkradnabe werden häufig zwei in etwa gleich große Klappen vorgesehen, die nach oben und unten wegklappen können, so daß der Grenzspalt ein H bildet. Diese Anordnung setzt dem sich mit Gas füllenden Luftsack wenig Widerstand entgegen, so daß die Hauptöffnung relativ rasch freigegeben wird und der Luftsack sich somit schnell entfalten kann. Ein typisches Beispiel hierfür zeigt die EP 0 461 276 A1. Diese Lösung hat allerdings auch Nachteile.

Die Anordnung des Luftsacks, seine Größe und die Geschwindigkeit, mit der er aufgeblasen wird, ist abgestimmt auf einen normal großen Menschen, der aufgrund seiner Armlänge einen bestimmten Abstand zum Lenkrad einhält. Während eines Unfalls, z. B. einen Frontalaufprall, wird der Oberkörper dieser Person durch den angelegten Rückhaltegurt gegenüber dem Fahrgastinnenraum verzögert, so daß der Kopf erst auf den Luftsack trifft, wenn dieser vollständig entfaltet und mit Gas gefüllt ist. Dies ist der Idealfall. Die Entwicklung eines Rückhaltesystems mit Airbag kann aber nicht nur auf diesen Idealfall bezogen werden; vielmehr müssen auch sogenannte Out-of-Position-Bedingungen (OOP) betrachtet werden, die z. B. bei kleinen Menschen oder bei normal großen in vorgebeugter Haltung vorliegen. In diesen Situationen ist zu erwarten, daß der Körper oder Kopf des Insassen nicht auf den aufgeblasenen sondern auf den sich noch entfaltende Luftsack trifft, wobei sehr viel größere Kräfte wirken als im ersten Fall.

Es sind sogar Situationen zu berücksichtigen, in denen der Fahrer mit seinem Oberkörper oder Kopf auf dem Lenkrad liegt, z. B. wenn er in einem stehenden Fahrzeug schläft, und der Airbag durch ein auffahrendes Fahrzeug ausgelöst wird. In einer solchen Situation wird der Kopf bzw. der Oberkörper unmittelbar von der sich öffnenden Klappe getroffen, wobei durch die Kräfte des nachdrückenden Luftsackes erhebliche Verletzungen hervorgerufen werden.

Eine Möglichkeit, dem Problem zu begegnen, ist die Lageerfassung des Fahrerkörpers mittels einer Sensoreinrichtung, wobei ein Auslösen des Systems im Crashfall unterbunden wird, falls sich der Körper in einer ungünstigen Position befindet. Abgesehen davon, daß derartige Systeme sehr aufwendig sind, können die Verletzungen des Fahrers, die auftreten, weil der Luftsack nicht ausgelöst worden ist, größer sein als die vom Luftsack hervorgerufenen Verletzungen.

Aus der US-PS 4 911 471 ist ein Gehäuse für einen aufblasbaren Luftsack gemäß dem Oberbegriff des Anspruchs 1 bekannt, der von einer Hauptklappe geschlossen wird. Der Öffnungswinkel dieser Klappe wird durch seitliche Bänder begrenzt. Dadurch soll der Luftsack beim Öffnen in eine bestimmte Richtung gedrängt werden. Vor allem soll aber verhindert werden, daß der Luftsack gegen die Windschutzscheibe prallt. Insofern gibt die Schrift keine weiteren Hinweise, wie die Leitwirkung verbessert werden kann, in dem Sinne, daß die Belastung für den Passagier möglichst klein bleibt.

Die Erfindung schlägt zur Lösung des Problems die folgende Möglichkeit vor:

Bei einem Gehäuse gemäß dem Oberbegriff des Anspruchs 1 ist vorgesehen, daß der Grenzspalt zwischen der Luftsackabdeckung und einen sie umgebenden Rahmen eine Aufreißlinie aufweist, die in mindestens drei symmetrisch angeordnete Abschnitte aufgeteilt ist, wobei der dritte Bereich von einem ersten und zweiten Bereich eingeschlossen wird und zumindest der dritte Bereich gegenüber den beiden ersten Bereichen einen anderen Rißwiderstand als die beiden ersten Bereiche aufweist.

Bei diesem Gehäuse kann zumindest eine bezogen auf die Einbauposition nach unten gerichtete, die Kammer begrenzende Seitenwand eine Seitenöffnung aufweisen, die von der oder den Nebenklappen abgedeckt ist/sind.

Wenn auch, wie oben schon erläutert, für die Abdeckung des Fahrerairbags normalerweise zwei Hauptklappen eingesetzt werden, so ist es doch bekannt, auch nur mit einer Klappe zu arbeiten, wie dies z. B. in der DE 44 24 686 Al ohne weitere Erläuterung dargestellt ist. Zur Lösung des oben genannten Problems ist der Vorschlag, die Klappe als Leitelement zu nutzen, aber noch nicht unterbreitet worden.

Mit den Merkmalen der Erfindung stellt sich der folgende Effekt ein: Beim Aufblasen des Luftsackes wird die Klappe nicht sofort vollständig aufgeklappt. Sie bewegt sich vielmehr entsprechend dem Fortschritt der Ausfaltung des Luftsackes nach oben und bildet dabei eine Leitfläche, die den Luftsack in der Entfaltungsphase zunächst nach unten, d. h. in Richtung des Oberkörpers des Fahrers drängt. Der Erstkontakt mit einem Fahrer unter OOP-Bedingungen wird daher nicht im Kopf-, sondern im Brustbereich stattfinden, der wesentlich größere Kräfte ohne Verletzung aufnehmen kann als der Kopf.

Durch das Auftreffen auf die Brust wird die Entfaltung des Luftsackes gedämpft, so daß sich, wenn der Luftsack vollständig aufgeblasen worden ist, der abschließende Kontakt zwischen Kopf und Luftsack weicher und nicht zu heftig gestaltet. Wesentlich für die Erfindung ist somit, daß die Öffnungsbewegung der Hauptklappe verzögert wird, damit sie die Funktion einer Leitfläche wahrnehmen kann. Der Ablauf der Aufklappbewegung kann gesteuert werden z. B. durch eine Anpassung des Gewichts der Klappe oder durch eine Anpassung der Steifigkeit des Scharniers zwischen Klappe und Gehäuse.

Der Leiteffekt stellt sich besonders dann ein, wenn der Luftsack ein sich radial entfaltender Luftsack ist.

Die Leitwirkung der Hauptklappe kann noch dadurch unterstützt werden, daß zusätzlich ein freier Entfaltungsweg nach unten zur Verfügung gestellt wird. Dies wird dadurch erreicht, daß zusätzlich zur Hauptklappe ein oder mehrere Nebenklappen vorgesehen werden, die Öffnungen in bezogen auf die Einbauposition eine die Kammer nach unten begrenzende Seitenwand abdecken. Die Nebenklappen können an der Hauptklappe oder an der Seitenwand scharnierartig angelenkt sein, wobei im zweiten Fall zwischen Nebenklappe und Hauptklappe eine aufreißbare Verbindung besteht.

Die Kammer zur Aufnahme des Luftsackes wird damit durch eine Seitenwand begrenzt, die in etwa senkrecht zur Hauptklappe verläuft. Diese Seitenwand weist Öffnungen auf, die durch die Nebenklappen verschlossen sind. Im Crashfall werden die Nebenklappen, je nachdem wie sie angeschlagen sind, nach oben oder unten weggedrückt, so daß sie schon in einer sehr frühen Phase der Entfaltung des Airbags einen nach unten gerichteten Weg für ihn öffnen. Unterstützt durch die oben beschriebene Leitfunktion der Hauptklappe wird damit erreicht, daß der Luftsack sich in der Anfangsphase der Entfaltung in Richtung auf die Brust des Fahrers ausdehnt.

Diese Öffnungen sind vor allem auch dann von Bedeutung, wenn der Fahrer mit seinem Körper auf der Hauptklappe liegt, der Entfaltungsdruck kann dann durch die Öffnungen in der Seitenwand nach unten zumindest zum Teil abgeleitet werden, so daß die auf den Körper des Fahrers wirkenden Kräfte minimiert sind.

Unter dem Begriff "nach unten gerichtete Seitenwand" sollen nicht nur Seitenwände verstanden werden, deren Flächennormale exakt nach unten ausgerichtet sind, sondern auch Seitenwände, deren Flächennormalen lediglich eine nach unten gerichtete Komponente aufweisen. Im allgemeinen wird die Seitenwand im wesentlichen senkrecht zur Hauptklappe verlaufen und daher leicht nach vorn, entsprechend der Neigung des Lenkrads im Fahrzeuginnenraum, ausgerichtet sein. Außerdem umfaßt der Begriff auch Seitenwände, deren Flächennormalen eine zur Seite gerichtete Komponente aufweisen.

So sieht eine Ausführung der Erfindung vor, daß der untere Rand des Gehäuses in einem Bogen verläuft, wobei die Unterkante der Hauptklappe den Bogenverlauf nachzeichnet. Die Seitenwand weist nebeneinanderliegende und ineinander übergehende Öffnungen auf, die durch mehrere aneinanderstoßende Nebenklappen verdeckt sind.

Denkbar wäre auch eine Hauptklappe in Form etwa eines Dreiecks, dessen Basiskante oben am Gehäuse des Airbags angeschlagen ist. Parallel zu den beiden Schenkeln erstrecken sich Seitenwände, die zur Seite und nach unten ausgerichtet sind. Diese Anordnung bietet sich vor allem dann an, wenn das Lenkrad zusätzlich über eine nach unten gerichtete Strebe an der Lenkradnabe befestigt ist, so daß sich die beiden Nebenklappen links und rechts der unteren Strebe befinden.

Bei der vorliegenden Erfindung kommt es entscheidend darauf an, daß die Klappe sich gleichmäßig öffnet, so daß sich der Luftsack bezogen auf eine Hochachse gleichmäßig entfaltet. Es soll vermieden werden, daß sich der Luftsack auf der einen Seite zunächst stärker entfaltet als auf der anderen Seite, da dann die beabsichtigte Wirkung, nämlich das dämpfende Auftreffen auf den Brustkorb einer in OOP-Bedingung sitzenden Person nicht vollständig erreicht werden kann. Bei einer herkömmlichen Betrachtungsweise ist die gleichmäßige Entfaltung des Luftsackes nicht so von Bedeutung, da es dort nur entscheidend darauf ankommt, daß sich der Luftsack überhaupt entfaltet.

Damit sich die Klappe gleichmäßig öffnen kann, kommt es entscheidend darauf an, daß in der Aufreißlinie eine gleichmäßige Schwächung des Abdeckmaterials vorliegt. Dies kann aber nicht immer mit hinreichender Sicherheit gewährleistet werden. Es wird daher vorgeschlagen, die Aufreißlinie in mindestens in etwa gleich lange Abschnitte zu unterteilen. Die ersten beiden Abschnitte liegen in den Endbereichen der Aufreißlinie, enden also am Scharnier. Der dritte Bereich befindet sich in der Mitte der Aufreißlinie, also z. B. im unteren Bogen einer U-förmigen Aufreißlinie. Die Schwächung der Aufreißlinie kann nun so vorgenommen werden, daß diese in den beiden ersten Bereichen deutlich schwächer ist als im dritten Bereich oder umgekehrt. Wenn die beiden ersten Bereiche schwächer sind als der dritte Bereich, ergibt sich beim Aufblasen des Luftsackes das folgende Bild. Zunächst wird die Aufreißlinie entlang der schwächeren Bereiche aufplatzen, bis auf der einen Seite das Scharnier bzw. auf der anderen Seite der stärkere Bereich erreicht ist. Der Aufreißvorgang wird in den beiden Bereichen nicht gleichmäßig ablaufen, was aber hingenommen werden kann, da die Klappe noch im dritten Bereich befestigt ist und daher noch kein Aufklappvorgang eingeleitet wird. Wenn der Riß z. B. im ersten Bereich den dritten Bereich erreicht, wird er zunächst nicht fortgesetzt, da die Druckkräfte des Luftsackes zunächst bewirken, daß die Aufreißlinie des zweiten Bereichs vollständig aufgerissen wird. Der Riß dehnt sich somit zunächst in beiden Bereichen bis zum jeweiligen Grenzpunkt am dritten Bereich aus. Erst jetzt bewirkt der steigende Druck im Luftsack, daß auch die Aufreißlinie im dritten Bereich aufplatzt, und zwar beginnend in den beiden Grenzpunkten.

Ein ähnliches Bild ergibt sich, wenn der dritte Bereich schwächer ist als die beiden ersten Bereiche. Der Riß wird sich zunächst im dritten Bereich ausbilden, und zwar zunächst bis zu den beiden Grenzpunkten, an denen der erste und zweite Bereich anschließt. Wenn diese erreicht sind, wird der steigende Druck im Luftsack bewirken, daß die beiden ersten Bereiche gleichmäßig aufgerissen werden.

Die Erfindung wird im folgenden anhand einiger Skizzen erläutert:
- Fig. 1:: zeigt ein Armaturenbrett mit einem davor angeordneten Lenkrad, in dessen Nabe ein Airbag angeordnet ist, wobei das Lenkrad über zwei seitliche Streben mit der Nabe verbunden ist.
- Fig. 2:: zeigt eine anders gestaltete Nabe eines Lenkrades und eine entsprechende anders geformte Abdeckklappe.
- Fig. 3:: zeigt einen Querschnitt entlang der Linie III - III der Figur 2.
- Fig. 4a:: zeigt skizzenhaft den Ausstoß eines Airbags aus einem Gehäuse mit herkömmlicher Klappe und
- Fig. 4b:: zeigt dieselbe Situation bei einem Gehäuse mit einer Abdeckung gemäß der Erfindung und
- Fig. 5:: zeigt eine schematische Darstellung einer Aufreißlinie.

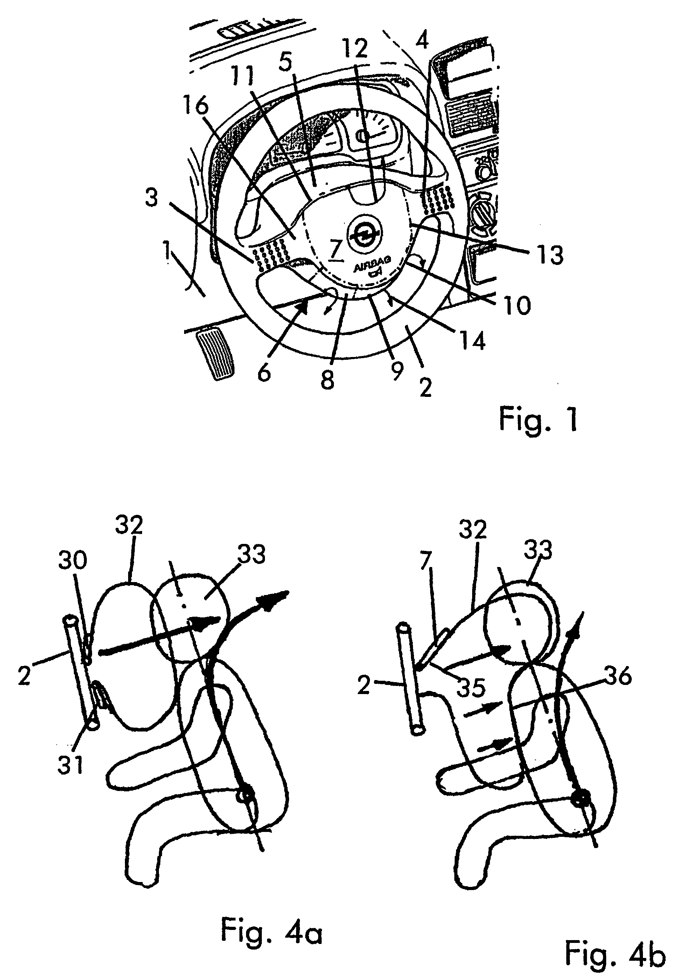

Zunächst wird auf die Fig. 1 Bezug genommen.

Diese zeigt einen dem Fahrer gegenüberliegenden Abschnitt eines Armaturenbrettes 1 und einem Lenker mit einem Lenkkranz 2, der über zwei Stege 3, 4 mit einer Lenkradnabe 5 verbunden ist. Diese enthält ein zum Fahrer hin offenes Gehäuse, das durch ein in die Nabenabdeckung 16 integrierte Luftsackabdeckung 6 verschlossen ist. Die Luftsackabdeckung besteht aus einer Hauptklappe 7 und mehreren Nebenklappen 8, 9, 10. Während die Hauptklappe 7 nahezu vollständig den Bereich der Öffnung abdeckt, der sich in oder parallel zur Lenkradebene befindet und die Hauptöffnung bildet, decken die Nebenklappen 8, 9, 10 einen Bereich der Öffnung ab, der bogenförmig unterhalb der Hauptöffnung verläuft und sich im wesentlichen senkrecht zur Hauptöffnung erstreckt.

Um die Begriffe Haupt- und Nebenöffnung besser zu verstehen, kann man sich einen offenen Topf vorstellen, wobei die Hauptöffnungsfläche durch den Rand des Topfes begrenzt wird. Die Nebenöffnung wird gebildet, indem ein Teil der Seitenwand des Topfes weggeschnitten wird: Die Öffnungsfläche ist gekrümmt und durch die Schnittränder der weggeschnittenen Randlinie der Hauptöffnung begrenzt.

Im Ausführungsbeispiel nach Fig. 1 wird das Gehäuse gebildet durch einen in etwa U-förmig verlaufenden Wandabschnitt und einen das offene Ende des U abschließenden geraden Wandabschnitt. Die Hauptklappe 7 weist eine dem Wandverlauf angepaßte Form auf, wobei der obere gerade Abschnitt 11 der Klappe scharnierartig an der Nabenabdeckung 16 befestigt ist. Wie der Pfeil 12 andeutet, klappt die Hauptklappe 7 entlang der Linie 11 nach oben weg. Die strichpunktierte Linie 13 deutet eine Aufreißlinie über den Grenzspalt zwischen der Hauptklappe 7 und der Nabenabdeckung bzw. zwischen der Hauptklappe 7 und den Nebenklappen 8, 9, 10 an, welche in etwa senkrecht zur Hauptklappe 7 stehen und an ihren hinteren Kanten scharnierartig an der Nabenabdeckung befestigt sind, so daß sie nach unten wegklappen (Pfeile 14).

Die Nebenklappen 8, 9, 10 decken einen Öffnungsbereich von ca. 135° ab. Sie stoßen mit ihren kurzen Seiten aneinander und mit ihren vorne liegenden Kanten an die Hauptklappe 7 an. Wie schon weiter oben erläutert worden ist, können die Nebenklappen 8, 9, 10 auch mit der Hauptklappe 7 scharnierartig verbunden werden, so daß sie nach oben wegklappen würden.

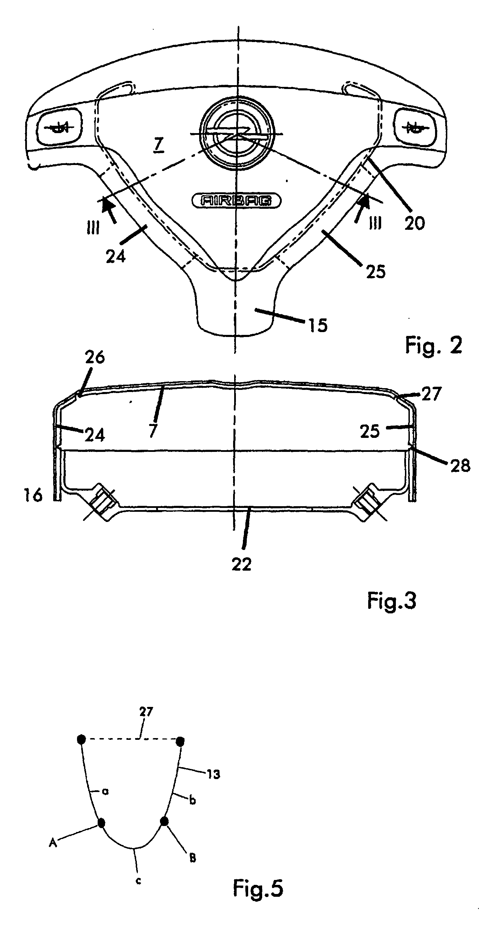

Die Fig. 2 zeigt eine etwas anders gestaltete Nabe. Der Grenzspalt 20 verläuft in etwa V-förmig entsprechend der Ausformung des darunterliegenden Gehäuses. Diese Gestaltung bietet sich an, wenn ein dritter nach unten gerichteter Steg 15 die Nabe bzw. die Nabenabdeckung mit dem Lenkrad 2 verbindet.

Die Fig. 3 zeigt einen Querschnitt entlang der Linie II - II. Man erkennt ein Gehäuse 22 für den Luftsack. Dies Gehäuse ist durch eine kappenartige Nabenabdeckung 16, in der Haupt- und Nebenklappen 8, 9, 10 integriert sind, verschlossen. Die Hauptklappe 7 befindet sich unmittelbar oberhalb des Gehäuses 22. Die beiden Nebenklappen 24, 25 verlaufen in etwa senkrecht zur Hauptklappe 7 und sind entsprechend der V-Form schräg zur Seite ausgerichtet. Wie schon erläutert gibt es zwei Möglichkeiten, die Nebenklappen 24, 25 anzuschlagen. Eine Möglichkeit ist in der linken Seite der Fig. 3 dargestellt. Die Aufreißlinie 13 befindet sich im Grenzspalt zwischen der Nebenklappe 24 und der Hauptklappe 7. Dementsprechend ist der in der Darstellung unten liegende Rand der Nebenklappe 24 gelenkig an der Nabenabdeckung angeschlagen. In der rechten Seite der Fig. 3 ist die Nebenklappe 25 über ein Scharnier 27 mit der Hauptklappe 7 verbunden und die Aufreißlinie 28 befindet sich im Grenzspalt zwischen der Nebenklappe 25 und der Nabenabdeckung.

Sowohl für die Ausführung nach Fig. 1 als auch für die Ausführung nach Fig. 2 bzw. 3 ist entscheidend, daß die Hauptklappe 7 die Hauptöffnung im wesentlichen vollständig überdeckt und das ggf. zusätzlich Seitenöffnungen freigegeben werden können. Die Wirkungsweise der Anordnung ist in den Fig. 4a und 4b erläutert. Die Fig. 4a zeigt eine herkömmliche Abdeckung eines Fahrerairbags mit zwei in etwa gleich großen Klappen 30, 31, die nach oben bzw. unten wegklappen. Der Airbag 32 dehnt sich rasch in Richtung der Hauptentfaltungsrichtung aus, so daß er mit voller Wucht den Kopf 33 eines Fahrers in einer OOP-Lage trifft, wodurch z. B. Hautabschürfungen hervorgerufen werden können.

Der Effekt des erfindungsgemäßen Vorschlages, insbesondere eine einzige Hauptklappe 7 für die Hauptöffnung vorzusehen, die diese vollständig überdeckt und nach oben wegklappt, ist in Fig. 4b dargestellt, die einen noch nicht ganz entfalteten Luftsack 32 zeigt. Die Hauptklappe 7 kann vom sich entfaltenden Luftsack 32 nicht rasch genug nach oben weggedrückt werden: Sie bildet daher eine Leitfläche 35, die in der dargestellten Anfangsphase des Entfaltungsvorganges den Luftsack nach unten in Richtung auf den Oberkörper des Fahrers leitet. Eine Behinderung der Entfaltung des Luftsackes durch eine untere Klappe ist nicht gegeben. Erst in der Endphase wölbt sich der Luftsack auch in Richtung des Kopfes 33 aus, wobei er sich dämpfend um den Kopf legt, da er schon einen Teil seiner Wucht verloren hat. Die Verletzungsmöglichkeit von Personen in OOP-Lagen ist somit auf Grund der Tatsache reduziert, daß die volle Entfaltungskraft des Luftsackes nicht direkt auf den Kopf 33 geleitet wird, sondern vorher vom Oberkörper 36 des Fahrers zum Teil aufgenommen wird.

Dieser Effekt wird durch seitliche Öffnungen, wie oben erläutert, unterstützt. Diese tragen dazu bei, daß sich die Ausdehnung des Luftsacks in der Anfangsphase der Entfaltung bevorzugt nach unten erfolgt. Ihre besondere Funktion entfalten sie aber, wenn der Fahrer dem Lenkrad so nahe ist, daß die Hauptklappe 7 an die Brust oder den Kopf anschlägt. In diesem Fall kann sich der Luftsack nach unten durch die spaltbreit geöffnete Hauptöffnung und durch die vor den geöffneten Nebenklappen 8, 9, 10 bzw. 24, 25 freigegebenen Seitenöffnungen nach unten ausdehnen, so daß der unmittelbare Druck auf die Hauptklappe 7 verringert ist.

Die Fig. 5 zeigt in schematischer Weise eine Aufreißlinie, die hier U-förmig ausgebildet ist, die aber auch z. B. V-förmig sein kann. Entscheidend ist, daß die Aufreißlinie in drei Bereiche unterteilt ist, nämlich den Bereichen a, b und c. Diese sind in etwa gleich groß und symmetrisch angeordnet, wobei die Bereiche a und b (erster und zweiter Bereich) in etwa entlang der Schenkel des U verlaufen und am Scharnier 27 enden, während der Bereich c (dritter Bereich) den Boden des U bildet und an die Bereiche a und b in den Grenzpunkten A und B anstößt. Entscheidend ist, daß die Bereiche unterschiedliche Rißwiderstände aufweisen. Dabei gibt es zwei Möglichkeiten. Entweder sind die Rißwiderstände der Bereiche a und b gleich groß, aber kleiner als der des Bereichs c oder umgekehrt. Je nachdem welche Variante gewählt wird, wird der Riß in den Bereichen a und b oder im Bereich c beginnen. Entscheidend ist, daß der Rißfortsatz, egal in welchem Bereich er beginnt, zunächst im Grenzpunkt A oder B wegen der Unstetigkeit im Rißwiderstand gestoppt wird, bis der jeweils andere Grenzpunkt erreicht wird. Erst dann setzt sich der Riß im ersten Fall im Bereich c und im zweiten Bereich gleichmäßig in den Bereichen a und b fort. Auf diese Weise wird ein weitgehend symmetrischer Verlauf des Aufreißens gewährleistet, so daß die Klappe gleichmäßig aufgedrückt wird.

## Patentansprüche

1. Gehäuse (22) mit einer Kammer zur Aufnahme eines zusammengefalteten und aufblasbaren Luftsackes, der aufgeblasen insbesondere den Fahrer eines Fahrzeuges vor einem Aufprall auf Fahrzeuginnenraumteile schützt, mit einer in die Hauptentfaltungsrichtung des Luftsackes ausgerichteten, durch eine aufklappbare Luftsackabdeckung (6) verschlossenen Hauptöffnung, wobei die Luftsackabdeckung (6) eine Hauptklappe (7) aufweist, die an einer ihrer Kanten über ein Scharnier (27) am Gehäuse (22) angeschlagen ist, wobei die Hauptklappe (7) an ihrer bezogen auf die Einbauposition oberen Kante mittels eines Scharniers (27) am Gehäuse angeschlagen ist, so daß sie bei der Entfaltung des Luftsacks eine Leitfläche (35) für ihn bildet, **dadurch gekennzeichnet, daß** der Grenzspalt (20) zwischen der Luftsackabdeckung (6) und einem sie umgebenden Rahmen eine Aufreißlinie (26, 28) aufweist, die in mindestens drei symmetrisch angeordnete Abschnitte (a, b, c) aufgeteilt ist, wobei der dritte Bereich (c) von einem ersten (a) und zweiten Bereich (b) eingeschlossen wird und zumindest der dritte Bereich (c) gegenüber den beiden ersten Bereichen (a,b) einen anderen Rißwiderstand als die beiden ersten Bereiche (a, b) aufweist.

2. Gehäuse nach Anspruch 1 **dadurch gekennzeichnet, daß** die Luftsackabdeckung (6) mindestens eine an die Hauptklappe (7) anschließende Nebenklappe (8, 9, 10; 24, 25) aufweist.

3. Gehäuse nach Anspruch 2, **dadurch gekennzeichnet, daß** zumindest eine bezogen auf die Einbauposition nach unten gerichtete, die Kammer begrenzende Seitenwand eine Seitenöffnung aufweist, die von der oder den Nebenklappen (8, 9, 10; 24, 25) abgedeckt ist/sind.

4. Gehäuse nach Anspruch 2 oder 3, **dadurch gekennzeichnet, daß** die Nebenklappen (8, 9, 10; 24, 25) mittels eines Scharniers (27) an die Hauptklappe (7) angeschlagen sind.

5. Gehäuse nach einem der Ansprüche 2 bis 4, **dadurch gekennzeichnet, daß** die Nebenklappen (8, 9, 10; 24, 25) mittels eines Scharniers an die Seitenwand angeschlagen sind.

6. Gehäuse nach einem der Ansprüche 1 bis 5, **dadurch gekennzeichnet, daß** die Hauptklappe (7) ein gleichschenkliges Dreieck bildet, wobei die Basis des Dreiecks mittels eines Scharniers (27) an das Gehäuse angeschlagen ist, und daß das Gehäuse (22) eine linke und'eine rechte Seitenwand aufweist, die in etwa parallel zu den Schenkeln des Dreiecks verlaufen und wobei in jede Seitenwand eine Nebenklappe (24, 25) eingesetzt ist.

7. Gehäuse nach einem der Ansprüche 1 bis 6, **dadurch gekennzeichnet, daß** die untere Kante der Hauptklappe (7) bogenförmig verläuft und das Gehäuse eine Seitenwand aufweist, die dem Bogenverlauf folgt.

8. Gehäuse nach einem der Ansprüche 1 bis 7, **dadurch gekennzeichnet, daß** der dritte Abschnitt einen größeren Rißwiderstand aufweist als die beiden ersten Bereiche.

9. Gehäuse nach einem der Ansprüche 1 bis 7, **dadurch gekennzeichnet, daß** der dritte Bereich (c) einen kleineren Rißwiderstand aufweist als die beiden ersten Bereiche.

## Claims

1. Housing (22) with a chamber for receiving a folded and inflatable air bag which when inflated protects in particular the driver of a vehicle against an impact on vehicle passenger compartment parts, with a main opening oriented in the main direction of unfolding of the air bag and closed by a hinge-opening air bag cover (6), wherein the air bag cover (6) comprises a main flap (7) which at one of its edges is fastened to the housing (22) by a hinge (27), wherein the main flap (7) at its upper edge referred to the fitted position is fastened to the housing with a hinge (27) so as to form a guide surface (35) for the air bag during unfolding thereof, **characterised in that** the boundary gap (20) between the air bag cover (6) and a frame surrounding it comprises a tear-open line (26, 28) which is divided into at least three symmetrically arranged sections (a, b, c), wherein the third region (c) is enclosed by a first (a) and second region (b) and at least the third region (c) compared with the first two regions (a, b) exhibits a different tear resistance to the first two regions (a, b).

2. Housing according to claim 1, **characterised in that** the air bag cover (6) comprises at least one auxiliary flap (8, 9, 10; 24, 25) adjoining the main flap (7).

3. Housing according to claim 2, **characterised in that** at least one side wall which is directed downwards referred to the fitted position and which defines the chamber comprises a side opening which is/are covered by the auxiliary flap or flaps (8, 9, 10; 24, 25).

4. Housing according to claim 2 or 3, **characterised in that** the auxiliary flaps (8, 9, 10; 24, 25) are fastened to the main flap (7) with a hinge (27).

5. Housing according to any of claims 2 to 4, **characterised in that** the auxiliary flaps (8, 9, 10; 24, 25) are fastened to the side wall with a hinge.

6. Housing according to any of claims 1 to 5, **characterised in that** the main flap (7) forms an equilateral triangle, wherein the base of the triangle is fastened to the housing with a hinge (27), and **in that** the housing (22) comprises a left and a right side wall, which run approximately parallel to the sides of the triangle, and wherein an auxiliary flap (24, 25) is inserted in each side wall.

7. Housing according to any of claims 1 to 6, **characterised in that** the lower edge of the main flap (7) runs arcuately and the housing comprises a side wall which follows the arcuate path.

8. Housing according to any of claims 1 to 7, **characterised in that** the third section exhibits a greater tear resistance than the first two regions.

9. Housing according to any of claims 1 to 7, **characterised in that** the third region (c) exhibits a lower tear resistance than the first two regions.

## Revendications

1. Boîtier (22) avec une chambre pour recevoir une poche à air pliable et gonflable qui, à l'état gonflé, notamment protège le conducteur d'un véhicule d'un choc avec des parties de l'habitacle du véhicule, avec une ouverture principale qui est orientée dans la direction principale de déploiement de la poche à air et est fermée par un couvercle (6) ouvrant de coussin gonflable, le couvercle (6) de coussin gonflable comprenant un volet principal (7) qui est lié de manière articulée au niveau de l'un de ses bords au boîtier (22) par l'intermédiaire d'une charnière (27), le volet principal (7) étant lié au boîtier à l'aide d'une charnière (27), au niveau de son bord supérieur, rapporté à la position de montage, de telle sorte que lors du déploiement de la poche à air, il forme une surface de guidage (35) pour celle-ci, **caractérisé en ce que** le joint (20) entre le couvercle (6) de coussin gonflable et un cadre qui l'entoure présente une ligne de déchirure (26, 28) qui est divisée en au moins trois portions (a,b,c) symétriques, la troisième portion (c) étant entourée par une première (a) et une deuxième (b) portions et au moins la troisième portion (c) présentant une résistance à la déchirure différente de celle des deux autres portions (a,b).

2. Boîtier selon la revendication 1, **caractérisé en ce que** le couvercle (6) de coussin gonflable présente au moins un volet secondaire (8, 9, 10 ; 24, 25) qui fait suite au volet principal (7).

3. Boîtier selon la revendication 2, **caractérisé en ce qu'**au moins une paroi latérale délimitant la chambre, tournée vers le bas par rapport à la position de montage, comporte une ouverture latérale qui est couverte par le ou les volet(s) secondaire(s) (8, 9, 10 ; 24, 25).

4. Boîtier selon la revendication 2 ou 3, **caractérisé en ce que** les volets secondaires (8, 9, 10 ; 24, 25) sont liés au volet principal (7) au moyen d'une charnière (27).

5. Boîtier selon une des revendications 2 à 4, **caractérisé en ce que** les volets secondaires (8, 9, 10 ; 24, 25) sont liés à la paroi latérale au moyen d'une charnière.

6. Boîtier selon une des revendications 1 à 5, **caractérisé en ce que** le volet principal (7) forme un triangle isocèle, la base du triangle étant liée au boîtier au moyen d'une charnière (27) et en **en ce que** le boîtier (22) présente des parois latérale gauche et droite qui sont sensiblement parallèles aux côtés du triangle, un volet secondaire (24, 25) étant prévu dans chaque paroi latérale.

7. Boîtier selon une des revendications 1 à 6, **caractérisé en ce que** le bord inférieur du volet principal (7) est courbe et que le boîtier présente une paroi latérale qui suit le tracé courbe.

8. Boîtier selon une des revendications 1 à 7, **caractérisé en ce que** la troisième portion présente une résistance à la déchirure supérieure à celle des deux premières portions.

9. Boîtier selon une des revendications 1 à 7, **caractérisé en ce que** la troisième portion (c) présente une résistance à la déchirure inférieure à celle des deux premières portions.
